# EUROPÄISCHE PATENTSCHRIFT

(11) **EP 3 357 298 B1**
(45) Veröffentlichungstag und Bekanntmachung des Hinweises auf die Patenterteilung: **11.09.2024**
(21) Anmeldenummer: 16769911.5
(22) Anmeldetag: 14.09.2016
(51) Int. Cl.: H04W 16/14, H04W 64/00, H04W 88/02

(54) **VERFAHREN UND VORRICHTUNG ZUR VERBESSERUNG DER SIGNALQUALITÄT MINDESTENS EINES KOMMUNIKATIONSDIENSTES IM BEREICH EINER MOBILEN SENDEEINHEIT**
METHOD AND DEVICE FOR IMPROVING THE SIGNAL QUALITY OF AT LEAST ONE COMMUNICATIONS SERVICE IN THE REGION OF A MOBILE TRANSMITTING UNIT
PROCÉDÉ ET DISPOSITIF POUR AMÉLIORER LA QUALITÉ DE SIGNAL D'AU MOINS UN SERVICE DE COMMUNICATION DANS LA ZONE D'UNE UNITÉ ÉMETTRICE MOBILE

(30) Priorität: 02.10.2015 DE 102015219109
(43) Veröffentlichungstag der Anmeldung: 08.08.2018
(73) Patentinhaber: Volkswagen Aktiengesellschaft, 38440 Wolfsburg (DE)
(72) Erfinder: BUBURUZAN, Teodor, 38118 Braunschweig (DE)
(86) Internationale Anmeldenummer: PCT/EP2016/071622
(87) Internationale Veröffentlichungsnummer: WO 2017/055081

(56) Entgegenhaltungen:
- EP-A1- 1 804 437
- US-A1- 2014 023 001
- US-A1- 2014 335 884

## Beschreibung

Die Erfindung betrifft ein Verfahren und eine Vorrichtung zur Verbesserung der Signalqualität mindestens eines Kommunikationsdienstes im Bereich einer mobilen Sendeeinheit.

Das für die Kommunikation beziehungsweise technische Anwendungen genutzte elektromagnetische Spektrum wird durch neu hinzukommende Anwendungen und die stärkere Verbreitung von existierenden Diensten oder Anwendungen immer stärker genutzt, was zu sich gegenseitig beeinflussenden Frequenzbändern führen kann. Diese Beeinflussung hat zumindest eine Verringerung der Signalqualität, wenn nicht sogar eine Störung eines Dienstes zur Folge.

Derartige Beeinflussungen können zum Beispiel zwischen Car-to-X- oder V2X-Systemen und Mautsystemen geschehen, da diese in benachbarten Frequenzbändern von 5,8 GHz beziehungsweise 5,9 GH arbeiten. Weitere Beispiele für benachbarte, überlappende oder identische Frequenzbänder sind zum Beispiel WLAN (5,15-5,72 GHz) und Flugzeug-Bordradar, Wetterradar (5,25-5,85 GHz), WLAN (2,4-2,4835 GHz) und Mikrowellengeräte (2,45 GHz) oder Bluetooth (2,4-2,48 GHz). Auch Radargeräte (2,32-2,4 GHz) und Bewegungsmelder (2,4 GHz) arbeiten in diesem Frequenzband. Der DECT Telefoniedienst (1,88-1,9 GHz) arbeitet in einem benachbarten Frequenzband zu UMTS Mobiltelefonen im FDD-Modus (Frequency Division Duplex) (1,92-1,98 GHz).

Generell sind die Frequenzbänder in Deutschland wie folgt zugewiesen, wobei Abweichungen oder spezielle Belegungen stets möglich sind. Das Frequenzband zwischen 300 kHz und 300 MHz wird häufig als Radiowellen für Rundfunkdienste bezeichnet. Das Frequenzband zwischen 300 MHz und 30 GHz wird häufig als Mikrowellen für den Mobilfunk bezeichnet und das Frequenzband zwischen 30 GHz und 300 GHz als Mikrowellen für Radar.

Die oben genannten Frequenzen sind beispielhaft für Deutschland beziehungsweise Europa angeführt. In anderen Ländern existieren ähnliche Konstellationen hinsichtlich der Frequenzbänder und damit ähnliche Probleme.

DE 10 2009 050 503 A1 offenbart eine optische Erkennung von Mautstellen, einer erkennbaren Geometrie der Stellen und des Fahrzeugflusses durch diese Stellen, um in solch einer Situation einen freien Pfad für das Fahrzeug zu definieren.

DE 10 2013 227 144 A1 offenbart eine Anpassung der Antennencharakteristik einer Infrastruktureinheit an eine detektierte Verkehrstopologie, wie Straßentopologie, Verkehrsrichtung oder Verkehrsfluss.

Draft ETSI TS 102 792 V0. 1. 8: Intelligent Transport Systems (IST); Mitigation techniques to avoid interference between European CEN Dedicated Short Range Communication (CEN DSRC) equipment and intelligent Transport Systems (ITS) operating in the 5 GHz frequency range offenbart ein Verfahren zur Verringerung von Interferenzen zwischen einer Kurzbereichskommunikation (CEN DSRC) einer Mautinfrastruktur und ITS G5 Teilnehmern. Dies kann kartenbasiert erfolgen, wobei die Position eines ITS G5 Teilnehmers mit auf einer Karten gespeicherten Position der Mautinfrastruktur verglichen und in Abhängigkeit der ermittelten Entfernung Maßnahmen ergriffen werden.

US 2014/0 094 165 A1 offenbart ein Verfahren zur Verringerung von Interferenzen zwischen zwei benachbarten Kommunikations-Frequenzbändern, wobei eine Aktivität in dem Frequenzband überwacht wird und entsprechend die Sendeaktivität von Basisstationen angepasst wird.

EP 1 804 437 A1 lehrt eine mobile Kommunikationsvorrichtung, die Kommunikation in einem Infrastrukturkommunikationsmodus für die Funkkommunikation über eine Basisstation und in einem Kommunikationsmodus für direkte Funkkommunikation mit einem anderen mobilen Kommunikationsgerät ermöglicht.

US 2014/0335884 A1 lehrt Methoden, Systeme und Geräte, um Informationen zur Festlegung zu ermitteln, ob mindestens ein Teil einer dedizierten Kurzstrecken-Kommunikation (DSRC) Spektrum verwendet werden soll. Aktuelle Standortinformation eines Multimode-Gerätes wird dazu ermittelt.

US 2014/0023001 A1 lehrt ein Verfahren, eine Vorrichtung und ein Computerprogrammprodukt für drahtlose Kommunikation, das in Verbindung mit einer Protokollverwendungserkennung bereitgestellt wird. In einem Beispiel ist ein Kommunikationsgerät (z. B. ein UE) ausgerüstet, um ein oder mehrere Signale von jeder Zelle einer zu empfangenden Mehrzahl von Zellen zu empfangen, die einen Satz von Störzellen enthalten.

Der Erfindung liegt nun die Aufgabe zugrunde, die Koexistenz benachbarter Kommunikationsdienste zu verbessern.

Diese Aufgabe wird gelöst durch ein Verfahren gemäß Anspruch1 beziehungsweise einer Vorrichtung gemäß Anspruch 9.

Ein nicht unter den Schutzumfang der angefügten Ansprüche fallendes Verfahren zur Verbesserung der Signalqualität mindestens eines Kommunikationsdienstes im Bereich einer mobilen Sendeeinheit, wobei zwei unterschiedliche Kommunikationsdienste in sich gegenseitig beeinflussenden Frequenzbändern vorgesehen sind und wobei die mobile Sendeeinheit zumindest in dem Frequenzband des ersten Kommunikationsdienstes sendet, umfasst, dass eine Aufstellung von Positionen von ortsfesten Installationen eines zweiten Kommunikationsdienstes generiert wird, dass anhand der Aufstellung die Position der mobilen Sendeeinheit im Hinblick auf Positionen von ortsfesten Installationen festgestellt wird, dass eine Sendecharakteristik der mobilen Sendeeinheit bei Annäherung an eine Position von ortsfesten Installationen angepasst wird und dass zumindest eine mobile Sendeeinheit mittels eines Sensors ortsfeste Installationen erfasst und weiteren mobilen Sendeeinheiten die Positionen von ortsfesten Installationen zur Verfügung stellt.

Das erfindungsgemäße Verfahren hat den Vorteil, dass keine zusätzliche, kostenintensive Hardware zur Detektion von ortsfesten Installationen eingesetzt werden muss. Es muss lediglich eine Liste, eine Tabelle oder ein anderes Speicherformat vorgesehen und gespeichert werden. Die Speicherung oder Integration in eine mobile Sendeeinheit kann bei der Produktion und/oder während der Lebensdauer der mobilen Sendeeinheit erfolgen. Die Speicherung der Positionen, der Vergleich der Positionen und/oder die Erzeugung eines Steuerbefehls zur Anpassung der Sendecharakteristik kann in der mobilen Sendeeinheit erfolgen und/oder in anderen Teilnehmern des ersten Kommunikationsdienstes, wie zum Beispiel einem Home Location Register (HLR), einem MSC (Mobile Switching Center) oder einem BSC (Base Station Controller). So kann die Beeinflussung der beiden oder auch mehrerer Kommunikationsdienste oder Kommunikationssysteme reduziert oder ausgeschlossen werden, was zu einer Verbesserung der Signalqualität eines oder auch beider Dienste führt. Die mobile Sendeeinheit ist kompatibel zu beiden Kommunikationsdiensten, das heißt Sender und/oder Empfänger und die benötigte Signalverarbeitung, Software etc. sind für beide Frequenzbänder ausgelegt. So können der erste und zweite Kommunikationsdienst wechseln, so dass die mobile Sendeeinheit eine Aufstellung mit ortsfesten Installationen beider Kommunikationsdienste oder zwei Aufstellungen für jeweils einen Kommunikationsdienst umfasst. Der Begriff im Bereich einer mobilen Sendeeinheit umfasst die mobile Sendeeinheit selbst sowie ihre Umgebung, die Ausdehnung der Umgebung beziehungsweise des Bereiches um die mobile Sendeeinheit kann durch die Reichweite des Senders und/oder Empfängers der mobile Sendeeinheit und/oder der ortsfesten Installation in dem ersten und/oder zweiten Kommunikationsdienst definiert werden. Anders ausgedrückt kann der Begriff im Bereich einer mobilen Sendeeinheit auch durch den Bereich oder Raum möglicher Beeinflussung der beiden Kommunikationsdienste definiert werden. Dieser Sensor zur Erfassung von ortsfesten Installationen kann zum Beispiel ein optischer Sensor, wie eine Kamera, oder ein Strahlungsdetektor sein. Die in der mobilen Sendeeinheit verbauten Empfänger für unterschiedliche Kommunikationsdienste können ebenfalls als Sensor verwendet werden, da diese die Abstrahlung einer ortsfesten Installation erfassen können und zumindest nach zwei Messungen an unterschiedlichen Orten den Standort der ortsfesten Installation über ein Triangulationsverfahren bestimmen können. Die so erfassten Positionen können in einer zentralen Datenbank oder zum Beispiel über eine Cloud-Anwendung dem ersten Kommunikationsdienst beziehungsweise weiteren mobilen Sendeeinheiten zur Verfügung gestellt werden. Auf diese Weise kann die Aufstellung der ortsfesten Installationen ständig aktuell gehalten werden. So können bereits vorhandene Sensoren zusätzlich zu dem Verfahren genutzt werden, das an sich ohne Sensorik arbeiten kann.

Die beiden Frequenzbänder der zwei unterschiedlichen Kommunikationsdienste können identisch oder benachbart sein. In beiden Fällen können Beeinflussungen und damit eine Beeinträchtigung der Signalqualität eines oder beider Dienste vorkommen. Da das vorgeschlagene Verfahren nicht auf einer Detektion durch Sensoren basiert, die wiederum eine eigene Bandbreite oder ein eigenes Frequenzband haben, sondern auf einer Aufstellung der Positionen von ortsfesten Installationen, wie Sendern und/oder Empfängern, ist das Verfahren sehr gut für unterschiedliche Frequenzbänder beziehungsweise Kommunikationsdienste geeignet. Ebenso ist leicht eine spätere Erweiterung für neu hinzukommende Dienste möglich, da kein Sensor angepasst oder neu installiert werden muss, sondern lediglich die Aufstellung aktualisiert werden muss.

Die mobile Sendeeinheit kann ein Mobilfunkgerät oder ein mobiler Computer sein. Dies umfasst Smartphones, Handys, Tablets, Notebooks und weitere mobile Geräte wie auch Fahrzeuge. Frequenzen von Mobilfunkdiensten liegen zum Beispiel in Deutschland in den folgenden Bereichen. Dem GSM-Mobilfunkstandard sind die Frequenzbereiche von 890 bis 915 MHz und von 935 bis 960 MHz (GSM 900) sowie von 1.710 bis 1.785 MHz und von 1.805 bis 1.880 MHz (GSM 1800) zugeordnet. Die UMTS-Netze nutzen Frequenzbereiche von 1.920 bis 1.980 MHz sowie von 2.110 bis 2.170 MHz. Für die LTE-Mobilfunknetze sind Frequenzen in den Bereichen 800 MHz, 1,8 GHz, 2 GHz und 2,6 GHz vorgesehen. Aufgrund der einfachen Integrierbarkeit des Verfahrens kann es in allen mobilen Geräten verwendet werden.

Die Aufstellung von Positionen wird der mobilen Sendeeinheit zugeführ und die Position der mobilen Sendeeinheit wird im Hinblick auf mindestens eine Position von ortsfesten Installationen in der mobilen Sendeeinheit festgestellt. So kann direkt im mobilen Gerät durch einfachen Vergleich zum Beispiel von Ortskoordinaten wie Breitengrad und Längengrad die Entfernung und durch mehrmaligen Vergleich auch die Annäherung an eine oder mehrere ortsfeste Installationen bestimmt werden. Die Aufstellung von Positionen wird der mobilen Sendeeinheit zugeführt und auch dort gespeichert.

Die Anpassung der Sendecharakteristik kann durch eine Reduktion der Sendeleistung der mobilen Sendeeinheit beziehungsweise eines Senders der mobilen Sendeeinheit erfolgen. Diese Maßnahme ist einfach umzusetzen und funktioniert auch bei einfachen rundstrahlenden Sendern oder Antennen.

Die Anpassung der Sendecharakteristik kann durch eine Änderung der Abstrahlcharakteristik der mobilen Sendeeinheit beziehungsweise eines Senders der mobilen Sendeeinheit derart erfolgen, dass die Abstrahlung in Richtung der ortsfesten Installation verringert wird. Damit kann die Anpassung richtungsselektiv erfolgen, so dass in einer Richtung die Sendeleistung reduziert oder auf Null gesetzt wird, während in anderen Richtungen noch kommuniziert werden kann. Dies kann beispielsweise bei einer Annäherung an eine ortsfeste Installation, zum Beispiel eine WLAN-Einheit, dazu führen, dass die Sendeleistung in Richtung der WLAN-Einheit reduziert wird, während in andere Richtungen weiterhin, zum Beispiel per Bluetooth oder Mobilfunk, mit anderen Teilnehmern kommuniziert werden kann. Zur Realisierung können einzelne Abstrahlungskeulen aktiviert, deaktiviert oder verschoben werden. Auch können Verfahren wie beam-shaping oder beam-forming eingesetzt werden.

Die Positionen können Angaben zu Breitengrad, Längengrad und Höhe umfassen. Da diese Daten zuverlässig als Standortdaten in heutigen mobilen Sendeeinheiten bekannt sind, ist ein einfacher und alle Dimensionen umfassender Vergleich der Fahrzeugposition mit den Positionen der ortsfesten Installationen möglich. Vorzugsweise wird die Sendecharakteristik beziehungsweise Abstrahlcharakteristik der mobilen Sendeeinheit anhand dieser Parameter angepasst. Alternativ kann auf die Höhe verzichtet werden, da diese schwieriger zu erfassen ist und eine Anpassung der Sendecharakteristik auch ohne Einbeziehung der Höheninformation grundsätzlich möglich ist.

Der erste Kommunikationsdienst kann ein Mobilfunk-Kommunikationsdienst sein. Ein Mobilfunk-Kommunikationsdienst ist prädestiniert für das Verfahren, da zum einen moderne Mobiltelefone mit allem ausgestattet sind, was zur Umsetzung der Erfindung benötigt wird, wie zum Beispiel Prozessor, Speicher, Sensoren usw., und zum anderen durch die große Verbreitung und vielfältige Mitführung durch Personen, das Konfliktpotential zwischen dem Mobilfunk-Kommunikationsdienst und anderen Diensten hoch ist.

Zusätzlich zu der Aufstellung von Positionen von ortsfesten Installationen eines zweiten Kommunikationsdienstes kann mindestens eine Aufstellung mindestens eines weiteren Kommunikationsdienstes generiert und bei der Feststellung der Position der mobilen Sendeeinheit im Hinblick auf Positionen von ortsfesten Installationen berücksichtigt werden. Da insbesondere Mobiltelefone immer mehr Schnittstellen zu unterschiedlichen Kommunikationsdiensten umfassen, kann die Berücksichtigung von Positionen von ortsfesten Installationen mehrerer unterschiedlicher Kommunikationsdienste die Handhabung und den Einsatz von mobilen Geräten verbessern.

Eine nicht unter den Schutzumfang der angefügten Ansprüche fallende Vorrichtung zur Verbesserung der Signalqualität mindestens eines Kommunikationsdienstes im Bereich einer mobilen Sendeeinheit, wobei zwei unterschiedliche Kommunikationsdienste in sich gegenseitig beeinflussenden Frequenzbändern vorgesehen sind und wobei die mobile Sendeeinheit eingerichtet ist, zumindest in dem Frequenzband des ersten Kommunikationsdienstes zu kommunizieren, umfasst, dass in der mobilen Sendeeinheit oder einem weiteren Teilnehmer des ersten Kommunikationsdienstes eine Aufstellung von Positionen von ortsfesten Installationen eines zweiten Kommunikationsdienstes hinterlegt sind, dass die mobile Sendeeinheit oder der weitere Teilnehmer des ersten Kommunikationsdienstes eingerichtet ist, anhand der Aufstellung die Position der mobilen Sendeeinheit im Hinblick auf Positionen von ortsfesten Installationen festzustellen, dass die mobile Sendeeinheit eingerichtet ist, eine Sendecharakteristik der mobilen Sendeeinheit bei Annäherung an eine Position von ortsfesten Installationen anzupassen und dass die mobile Sendeeinheit einen Sensor zur Erfassung der ortsfesten Installation aufweist und eingerichtet ist mittels des Sensors ortsfeste Installationen zu erfassen und weiteren mobilen Sendeeinheiten die Positionen von ortsfesten Installationen zur Verfügung zu stellen. Der Sensor kann zum Beispiel ein optischer Sensor, wie eine Kamera, oder ein Strahlungsdetektor sein. Die in der mobilen Sendeeinheit verbauten Empfänger für unterschiedliche Kommunikationsdienste können ebenfalls als Sensor verwendet werden, da diese die Abstrahlung einer ortsfesten Installation erfassen können und zumindest nach zwei Messungen an unterschiedlichen Orten den Standort der ortsfesten Installation über ein Triangulationsverfahren bestimmen können. Die so erfassten Positionen können in einer zentralen Datenbank oder zum Beispiel über eine Cloud-Anwendung dem ersten Kommunikationsdienst beziehungsweise weiteren mobilen Sendeeinheiten zur Verfügung gestellt werden. Auf diese Weise kann die Aufstellung der ortsfesten Installationen ständig aktuell gehalten werden. Es gelten die gleichen Vorteile und Modifikationen wie zuvor beschrieben.

Die mobile Sendeeinheit kann ein Mobilfunkgerät oder ein mobiler Computer sein. Dies umfasst Smartphones, Handys, Tablets, Notebooks und weitere mobile Geräte wie auch Fahrzeuge, beziehungsweise Steuergeräte von Fahrzeugen.

Die mobile Sendeeinheit kann einen Sensor zur Erfassung der ortsfesten Installation aufweisen.

Der Sensor kann zum Beispiel ein optischer Sensor, wie eine Kamera, oder ein Strahlungsdetektor sein. Die in der mobilen Sendeeinheit verbauten Empfänger für unterschiedliche Kommunikationsdienste können ebenfalls als Sensor verwendet werden, da diese die Abstrahlung einer ortsfesten Installation erfassen können und zumindest nach zwei Messungen an unterschiedlichen Orten den Standort der ortsfesten Installation über ein Triangulationsverfahren bestimmen können. Die so erfassten Positionen können in einer zentralen Datenbank oder zum Beispiel über eine Cloud-Anwendung dem ersten Kommunikationsdienst beziehungsweise weiteren mobilen Sendeeinheiten zur Verfügung gestellt werden. Auf diese Weise kann die Aufstellung der ortsfesten Installationen ständig aktuell gehalten werden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine schematische Darstellung von zwei Kommunikationsdiensten;
- Figur 2: eine schematische Darstellung einer mobilen Sendeeinheit mit einem Kommunikationsdienst; und
- Figur 3: ein Ablaufdiagramm eines Verfahren zur Verbesserung der Signalqualität mindestens eines Kommunikationsdienstes.

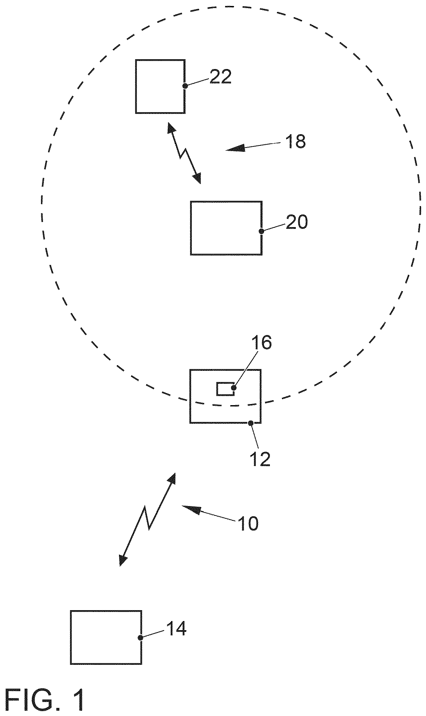

Figur 1 zeigt eine schematische Darstellung eines ersten Kommunikationsdienstes 10, in diesem Beispiel ein Mobilfunkdienst, wie zum Beispiel UMTS im FDD-Modus (Frequency Division Duplex) in einem Frequenzband von 1,92 bis 1,98 GHz. Dieser erste Kommunikationsdienst 10 erlaubt eine Kommunikation zwischen einer mobilen Sendeeinheit 12 und einem weiteren Teilnehmer 14, wie zum Beispiel einer Infrastruktur in Form einer Basisstation. Zur Teilnahme an dem ersten Kommunikationsdienst 10 enthält jede mobile Sendeeinheit 12 und gegebenenfalls jeder weitere Teilnehmer 14 eine Sendeeinheit 16, die auch Bestandteil einer kombinierten Sende- und Empfangseinheit sein kann. Der erste Kommunikationsdienst 10 kann von stehenden und sich bewegenden mobilen Sendeeinheiten 12 genutzt werden.

In der in Figur 1 dargestellten Situation ist ein zweiter Kommunikationsdienst 18 aktiv. Der zweite Kommunikationsdienst 18 ist in diesem Beispiel ein DECT Telefoniedienst, das in einem benachbarten Frequenzband von 1,88 bis 1,9 GHz arbeitet. Als Teilnehmer oder Bestandteile des zweiten Kommunikationsdienstes 18 sind beispielhaft eine ortsfeste Installation 20, zum Beispiel ein DECT Basisstation, und ein Teilnehmer 22, zum Beispiel ein DECT Mobiltelefon, dargestellt.

Da die beiden Kommunikationsdienste 10 und 18 benachbarte Frequenzen verwenden, kann es zu Überlagerungen, Interferenzen oder Störungen und damit zu einer Verschlechterung der Signalqualität kommen, wenn keine geeigneten Gegenmaßnahmen getroffen werden.

Hier werden die Sendeeinheiten 16 von mobilen Sendeeinheiten 12, die sich in einem definierten Umfeld oder Bereich 24 befinden, angepasst, um eine Störung des zweiten Kommunikationsdienstes 18 zu vermeiden oder zu verringern. Das Umfeld 24 kann zum Beispiel anhand der Sendeleistung beziehungsweise der Reichweite der ortsfesten Installation 20 oder anhand einer Beeinflussungsrate oder eines Störungsfaktors zwischen den beiden Diensten 10, 18 definiert werden. Hier ist ein um die ortsfeste Installation 20 konzentrisch angeordnetes Umfeld 24 dargestellt. Aus Gründen der Übersichtlichkeit ist das Umfeld 24 nicht maßstabsgerecht dargestellt. Der Radius des Umfeld 24 kann zum Beispiel wenige Meter bis mehrere hundert Meter betragen. Die Erstreckung des Umfelds 24 muss nicht symmetrisch sein, sondern kann zum Beispiel Sendekeulen und/oder Empfangskeulen der ortsfesten Installation 20 folgen. Der Radius des Umfeld 24 beziehungsweise der Abstand zu der ortsfesten Installation 20 kann zum Beispiel zu der Send- und/oder Empfangsleistung oderempfindlichkeit korrelieren.

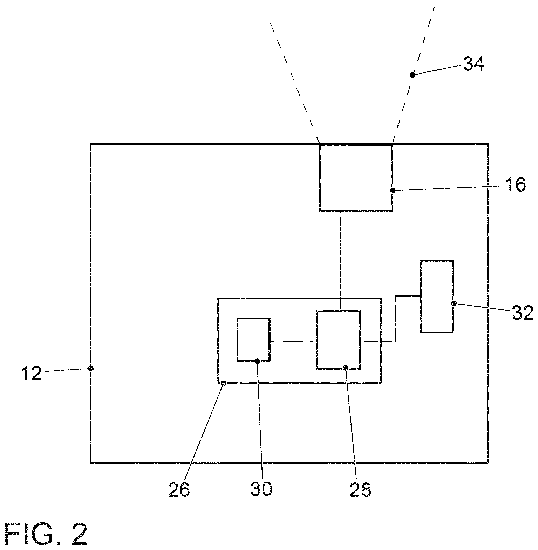

Figur 2 zeigt beispielhaft in detaillierter Darstellung einen Bereich der mobilen Sendeeinheit 12 mit der Sendeeinheit 16 und einer Recheneinheit 26. Die Recheneinheit 26 kann zum Beispiel ein Mikroprozessor oder ein Embedded System (eingebettete Systeme) sein und kommuniziert mit der Sendeeinheit 16.

Die Recheneinheit 26 enthält einen Rechner 28 und eine Positionsliste 30, mit Angaben zu geographischen Standorten von ortsfesten Installationen 20 und gegebenenfalls weiteren

Infrastrukturen des zweiten Kommunikationsdienstes 18. Das Bezugszeichen 30 kann auch einen Speicher bezeichnen, in dem eine Positionsliste oder ähnliche Darstellung abgelegt werden kann.

Die Positionsliste 30 umfasst in diesem Beispiel Angaben zu den ortsfesten Installationen 20 in folgendem Format: Station1: (Latitude1, Longitude1, Altitude1) bis StationN: (LatitudeN, LongitudeN, AltitudeN). Alternativ kann auf die Höhenangabe verzichtet werden, da oftmals eine zweidimensionale Ausrichtung einfacher und bereits erfolgreich sein kann.

Die mobile Sendeeinheit 12 kann ferner ein Navigationsmodul 32 umfassen, das eine entsprechende Recheneinheit oder ein Sensor zur Erfassung der aktuellen Position der mobilen Sendeeinheit 12, wie zum ein GPS-Sensor, sein kann. Das Navigationsmodul 32 ist mit der Recheneinheit 26 beziehungsweise mit dem Rechner 28 verbunden, so dass die aktuelle Position der mobilen Sendeeinheit 12 in der Recheneinheit 26 vorhanden beziehungsweise bekannt ist. Das Navigationsmodul 32 kann auch Bestandteil der Recheneinheit 26 sein. Alternativ oder als Ergänzung zu dem Navigationsmodul 32 kann die Position der mobilen Sendeeinheit 12 anhand eines Kommunikationsdienstes, an dem die mobile Sendeeinheit 12 teilnimmt, bestimmt werden. Dies kann zum Beispiel über eine Triangulation oder eine Laufzeitmessung von Signalen im Hinblick auf ortsfeste Installationen des Kommunikationsdienstes, wie zum Beispiel Basisstationen, geschehen.

Die Recheneinheit 26 steuert auf Basis der vorliegenden Information, das heißt der Position der mobilen Sendeeinheit 12 und der Positionen der ortsfesten Installationen 20, den Sender 16 derart an, dass dessen Abstrahlungsbereich 34 angepasst wird. Dies kann über eine Verringerung der Sendeleistung und/oder eine Änderung der Abstrahlungscharakteristik realisiert werden.

Zumindest eine mobile Sendeeinheit des ersten Kommunikationsdienstes oder Kommunikationssystems kann einen Sensor enthalten, der eingerichtet ist, ortsfeste Installationen 20 zu erfassen. Dies kann ein dedizierter Sensor, zum Beispiel ein optischer Sensor wie eine Kamera, sein oder eine Sende/Empfangseinheit beziehungsweise ein Empfänger der mobilen Sendeeinheit, der über empfangene Signale das Vorhandensein eines Kommunikationsdienstes und die Position von ortsfesten Installationen 20 dieses Kommunikationsdienstes detektiert. Die so detektierten Positionen von ortsfesten Installationen 20 gibt die mobile Sendeeinheit an Teilnehmer zumindest des ersten Kommunikationsdienstes 10 weiter. Diese Teilnehmer können weitere mobile Sendeeinheiten oder Infrastruktureinheiten sein .

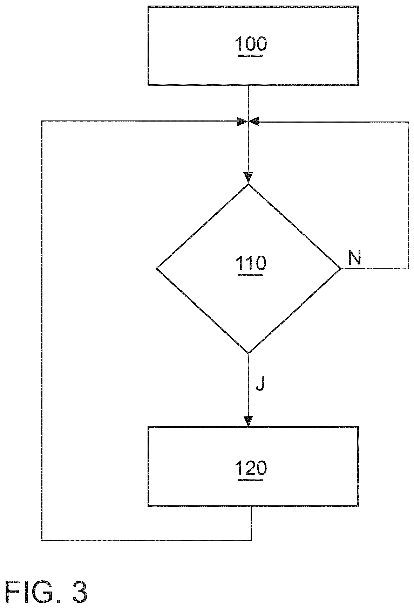

Anhand von Figur 3 wird nun das Verfahren beschrieben, das in diesem Beispiel weitestgehend in der Recheneinheit 26 ausgeführt wird.

In einem ersten Schritt 100 wird die Positionsliste 30 in die Recheneinheit 26 eingebracht. Dies kann zum Beispiel bei der Herstellung der Recheneinheit 26 oder der mobilen Sendeeinheit 12 geschehen. Alternativ oder zur Einspielung von Aktualisierungen kann die Positionsliste 30 während der Lebensdauer der mobilen Sendeeinheit 12, auch mehrmalig, gespeichert oder aktualisiert werden. Statt einer Liste können auch andere Formen wie zum Beispiel eine Matrix oder dergleichen gewählt werden. Wichtig ist, dass die Positionen von ortsfesten Installationen 20, wie zum Beispiel Basisstationen, des zweiten Kommunikationsdienstes 18 in der Recheneinheit 26 vorhanden sind. Diese Hinterlegung kann gegebenenfalls auch ohne Speicherung über einen Online-Zugang oder über einen Zugriff auf eine Cloud-Anwendung geschehen.

In einem zweiten Schritt 110 wird überprüft, ob die mobile Sendeeinheit 12 sich in der Nähe einer ortsfesten Installation 20 befindet. Dazu wird die Position der mobilen Sendeeinheit 12 mit Positionen von ortsfesten Installationen 20 verglichen. Zu jeder Positionen von ortsfesten Installationen 20 ist ein Umfeld 24 definiert. Dieses Umfeld kann für alle ortsfesten Installationen 20 identisch sein, oder es ist an die jeweiligen Gegebenheiten angepasst, wobei dabei örtliche Charakteristika der Umgebung und/oder Sende-Empfangseigenschaften der jeweiligen ortsfesten Installation 20 berücksichtigt werden.

Es wird nun geprüft, ob die mobile Sendeeinheit 12 sich in einem der Umfelde 24 befindet. Ist dies der Fall, wird zu einem dritten Schritt 120 verzweigt. Befindet sich die mobile Sendeeinheit 12 außerhalb eines Umfelds 24 wird zurück zu Schritt 110 verzweigt, das heißt dass die Sendecharakteristik des ersten Kommunikationsdienstes 10 beziehungsweise der Sendeeinheit 16 nicht verändert oder angepasst wird und weiterhin in einer Schleife die Position der mobilen Sendeeinheit 12 mit Positionen von ortsfesten Installationen 20 abgeglichen wird.

In dem dritten Schritt 120 wird nun die Sendecharakteristik des ersten Kommunikationsdienstes 10 beziehungsweise der Sendeeinheit 16 angepasst. Dies kann über eine Verringerung der Sendeleistung und/oder eine Änderung der Abstrahlungscharakteristik realisiert werden. Die Anpassung basiert zumindest auf dem geographischen Eintrag in der Positionsliste 30.

Zusätzlich können weitere Informationen zu der jeweiligen ortsfesten Installation 20 vermerkt und berücksichtigt werden. Dies können zum Beispiel elektrische oder funktechnische Eigenschaften der Installation wie zum Beispiel Sendeleistung oder Abstrahlungscharakteristik sein. Weiterhin können Statusinformationen wie aktiv oder ausgeschaltet oder das Frequenzband des zweiter Kommunikationsdienstes 18 in der Positionsliste 30 vermerkt beziehungsweise in der Recheneinheit 26 vorhanden sein. Auch kann vorgesehen sein, dass die Art und Weise der Anpassung der Sendecharakteristik derart vorgegeben ist.

Nach der Anpassung beziehungsweise der Erzeugung und Absendung eines entsprechenden Steuerbefehls durch das Steuergerät 26 an die Sendeeinheit 16 wird wieder zurück zu Schritt 110 verzweigt. Somit ergibt sich eine Überwachungsschleife, in der dauerhaft geprüft wird, ob der aktuelle Zustand der Sendeeinheit 16, entweder angepasst (Schritt 120) oder unangepasst (N nach Schritt 110), mit den Vorgaben für die ortsfesten Installation 20 des zweiten Kommunikationsdienstes 18 übereinstimmen.

### Bezugszeichenliste

- 10: erster Kommunikationsdienst
- 12: mobile Sendeeinheit
- 14: Teilnehmer
- 16: Sender
- 18: zweiter Kommunikationsdienst
- 20: ortsfeste Installation
- 22: Teilnehmer
- 24: Umfeld
- 26: Recheneinheit
- 28: Rechner
- 30: Positionsliste
- 32: Navigationsmodul
- 34: Abstrahlungsbereich
- 100: erster Schritt
- 110: zweiter Schritt
- 120: dritter Schritt

## Patentansprüche

1. Verfahren zur Verbesserung der Signalqualität mindestens eines Kommunikationsdienstes (10, 18) im Bereich einer mobilen Sendeeinheit (12),
wobei zwei unterschiedliche Kommunikationsdienste (10, 18) in sich gegenseitig beeinflussenden Frequenzbändern vorgesehen sind und wobei die mobile Sendeeinheit (12) zumindest in dem Frequenzband des ersten Kommunikationsdienstes (10, 18) sendet,
wobei eine Aufstellung von Positionen von ortsfesten Installationen (20) eines zweiten Kommunikationsdienstes (18) generiert wird,
wobei die Aufstellung der mobilen Sendeeinheit (12) zugeführt und auch dort gespeichert wird,
wobei anhand der Aufstellung die Position der mobilen Sendeeinheit (12) im Hinblick auf Positionen von ortsfesten Installationen (20) festgestellt wird und wobei eine Sendecharakteristik der mobilen Sendeeinheit (12) bei Annäherung an eine Position von ortsfesten Installationen (20) angepasst wird,
wobei zumindest eine mobile Sendeeinheit (12) mittels eines Sensors ortsfeste Installationen (20) erfasst und weiteren mobilen Sendeeinheiten die Positionen von ortsfesten Installationen (20) zur Verfügung stellt,
wobei die mobile Sendeeinheit (12) kompatibel zu beiden Kommunikationsdiensten (10, 18) ist, sodass der erste und zweite Kommunikationsdienst wechseln können,
wobei die mobile Sendeeinheit (12) die Aufstellung ortsfester Installationen beider Kommunikationsdienste (10, 18) umfasst.

2. Verfahren nach Anspruch 1, **dadurch gekennzeichnet, dass** die beiden Frequenzbänder der zwei unterschiedlichen Kommunikationsdienste (10, 18) identisch oder benachbart sind.

3. Verfahren nach Anspruch 1 oder 2, **dadurch gekennzeichnet, dass** die mobile Sendeeinheit ein Mobilfunkgerät oder ein mobiler Computer ist.

4. Verfahren nach einem der Ansprüche 1 bis 3, **dadurch gekennzeichnet, dass** die Anpassung der Sendecharakteristik durch eine Reduktion der Sendeleistung der mobilen Sendeeinheit (12) erfolgt.

5. Verfahren nach einem der Ansprüche 1 bis 4, **dadurch gekennzeichnet, dass** die Anpassung der Sendecharakteristik durch eine Änderung der Abstrahlcharakteristik der mobilen Sendeeinheit (12) derart erfolgt, dass die Abstrahlung in Richtung der ortsfesten Installation (20) verringert wird.

6. Verfahren nach einem der Ansprüche 1 bis 5, **dadurch gekennzeichnet, dass** die Positionen Angaben zu Breitengrad, Längengrad und Höhe umfassen.

7. Verfahren nach einem der Ansprüche 1 bis 6, **dadurch gekennzeichnet, dass** der erste Kommunikationsdienst (10, 18) ein Mobilfunk-Kommunikationsdienst ist.

8. Verfahren nach einem der Ansprüche 1 bis 7, **dadurch gekennzeichnet, dass** zusätzlich zu der Aufstellung von Positionen von ortsfesten Installationen (20) eines zweiten Kommunikationsdienstes (18) mindestens eine Aufstellung von Positionen von ortsfesten Installationen (20) mindestens eines weiteren Kommunikationsdienstes generiert und bei der Feststellung der Position d er mobilen Sendeeinheit (12) im Hinblick auf Positionen von ortsfesten Installationen (20) berücksichtigt wird.

9. Vorrichtung zur Verbesserung der Signalqualität mindestens eines Kommunikationsdienstes (18) im Bereich einer mobilen Sendeeinheit (12),
wobei zwei unterschiedliche Kommunikationsdienste (10, 18) in sich gegenseitig beeinflussenden Frequenzbändern vorgesehen sind und
wobei die mobile Sendeeinheit (12) eingerichtet ist, zumindest in dem Frequenzband des ersten Kommunikationsdienstes (10, 18) zu kommunizieren,
wobei in der mobilen Sendeeinheit (12) eine Aufstellung von Positionen von ortsfesten Installationen (20) eines zweiten Kommunikationsdienstes (18) hinterlegt sind, die der mobilen Sendeeinheit (12) zugeführt und auch dort gespeichert ist,
wobei die mobile Sendeeinheit (12) oder der weitere Teilnehmer des ersten Kommunikationsdienstes (10, 18) eingerichtet ist, anhand der Aufstellung die Position der mobilen Sendeeinheit (12) im Hinblick auf Positionen von ortsfesten Installationen (20) festzustellen, und
wobei die mobile Sendeeinheit (12) eingerichtet ist, eine Sendecharakteristik der mobilen Sendeeinheit (12) bei Annäherung an eine Position von ortsfesten Installationen (20) anzupassen,
wobei die mobile Sendeeinheit (12) einen Sensor zur Erfassung der ortsfesten Installation (20) aufweist und eingerichtet ist, mittels des Sensors ortsfeste Installationen (20) zu erfassen und weiteren mobilen Sendeeinheiten die Positionen von ortsfesten Installationen (20) zur Verfügung zu stellen,
wobei die mobile Sendeeinheit (12) kompatibel zu beiden Kommunikationsdiensten (10, 18) ist, sodass der erste und zweite Kommunikationsdienst wechseln können,
wobei die mobile Sendeeinheit (12) die Aufstellung ortsfester Installationen beider Kommunikationsdienste (10, 18) umfasst.

10. Vorrichtung nach Anspruch 9, **dadurch gekennzeichnet, dass** die mobile Sendeeinheit (12) ein Mobilfunkgerät oder ein mobiler Computer ist.

## Claims

1. Method for improving the signal quality of at least one communication service (10, 18) in the area of a mobile transmitting unit (12),
wherein two different communication services (10, 18) are provided in mutually influencing frequency bands and wherein the mobile transmitting unit (12) transmits at least in the frequency band of the first communication service (10, 18),
wherein a list of positions of fixed installations (20) of a second communication service (18) is generated,
wherein the list is supplied to the mobile transmitting unit (12) and also stored there,
wherein the position of the mobile transmitting unit (12) is determined with respect to positions of stationary installations (20) on the basis of the list, and wherein a transmission characteristic of the mobile transmitting unit (12) is adapted when approaching a position of stationary installations (20),
wherein at least one mobile transmitting unit (12) detects stationary installations (20) by means of a sensor and provides the positions of stationary installations (20) to further mobile transmitting units,
wherein the mobile transmitting unit (12) is compatible with the two communication services (10, 18), so that the first and the second communication service can switch,
wherein the mobile transmitting unit (12) comprises the list of fixed installations of the two communication services (10, 18).

2. Method according to claim 1, **characterized in that** the two frequency bands of the two different communication services (10, 18) are identical or adjacent.

3. Method according to either claim 1 or claim 2, **characterized in that** the mobile transmitting unit is a mobile radio device or a mobile computer.

4. Method according to any of claims 1 to 3, **characterized in that** the adaptation of the transmission characteristic is carried out by reducing the transmission power of the mobile transmission unit (12).

5. Method according to any of claims 1 to 4, **characterized in that** the adaptation of the transmission characteristic is carried out by changing the emission characteristics of the mobile transmission unit (12) such that the emission in the direction of the fixed installation (20) is reduced.

6. Method according to any of claims 1 to 5, **characterized in that** the positions include information on latitude, longitude and altitude.

7. Method according to any of claims 1 to 6, **characterized in that** the first communication service (10, 18) is a mobile radio communication service.

8. Method according to any of claims 1 to 7, **characterized in that** in addition to the list of positions of fixed installations (20) of a second communication service (18), at least one list of positions of fixed installations (20) of at least one further communication service is generated and taken into account when determining the position of the mobile transmitting unit (12) with respect to positions of fixed installations (20).

9. Apparatus for improving the signal quality of at least one communication service (18) in the area of a mobile transmitting unit (12),
wherein two different communication services (10, 18) are provided in mutually influencing frequency bands and
wherein the mobile transmitting unit (12) is arranged to communicate at least in the frequency band of the first communication service (10, 18),
wherein a list of positions of fixed installations (20) of a second communication service (18) is stored in the mobile transmitting unit (12), which list is supplied to the mobile transmitting unit (12) and also stored there,
wherein the mobile transmitting unit (12) or the further subscriber of the first communication service (10, 18) is designed to determine the position of the mobile transmitting unit (12) with respect to positions of fixed installations (20) on the basis of the list, and
wherein the mobile transmitting unit (12) is designed to adapt a transmission characteristic of the mobile transmitting unit (12) when approaching a position of fixed installations (20),
wherein the mobile transmitting unit (12) has a sensor for detecting the stationary installation (20) and is designed to detect stationary installations (20) by means of the sensor and to provide the positions of stationary installations (20) to further mobile transmitting units,
wherein the mobile transmitting unit (12) is compatible with the two communication services (10, 18), so that the first and the second communication service can switch,
wherein the mobile transmitting unit (12) comprises the list of fixed installations of the two communication services (10, 18).

10. Apparatus according to claim 9, **characterized in that** the mobile transmitting unit (12) is a mobile radio device or a mobile computer.

## Revendications

1. Procédé permettant d'améliorer la qualité de signal d'au moins un service de communication (10, 18) dans la zone d'une unité d'émission mobile (12),
dans lequel deux services de communication (10, 18) différents sont prévus dans des bandes de fréquences qui s'influencent mutuellement et dans lequel l'unité d'émission mobile (12) émet au moins dans la bande de fréquences du premier service de communication (10, 18),
dans lequel une liste de positions d'installations fixes (20) d'un deuxième service de communication (18) est générée,
dans lequel la liste est amenée à l'unité d'émission mobile (12) et y est également mémorisée,
dans lequel, à l'aide de la liste, la position de l'unité d'émission mobile (12) par rapport à des positions d'installations fixes (20) est déterminée et dans lequel une caractéristique d'émission de l'unité d'émission mobile (12) est adaptée à l'approche d'une position d'installations fixes (20),
dans lequel au moins une unité d'émission mobile (12) détecte des installations fixes (20) au moyen d'un capteur et met à la disposition d'autres unités d'émission mobiles les positions d'installations fixes (20),
dans lequel l'unité d'émission mobile (12) est compatible avec les deux services de communication (10, 18), de sorte que les premier et deuxième services de communication peuvent alterner,
dans lequel l'unité d'émission mobile (12) comprend la liste d'installations fixes des deux services de communication (10, 18).

2. Procédé selon la revendication 1, **caractérisé en ce que** les deux bandes de fréquences des deux services de communication (10, 18) différents sont identiques ou voisines.

3. Procédé selon la revendication 1 ou 2, **caractérisé en ce que** l'unité d'émission mobile est un appareil radio mobile ou un ordinateur mobile.

4. Procédé selon l'une des revendications 1 à 3, **caractérisé en ce que** l'adaptation de la caractéristique d'émission est réalisée par une réduction de la puissance d'émission de l'unité d'émission mobile (12).

5. Procédé selon l'une des revendications 1 à 4, **caractérisé en ce que** l'adaptation de la caractéristique d'émission est réalisée par une modification de la caractéristique de rayonnement de l'unité d'émission mobile (12), de telle sorte que le rayonnement en direction de l'installation fixe (20) est réduit.

6. Procédé selon l'une des revendications 1 à 5, **caractérisé en ce que** les positions comprennent des indications de latitude, de longitude et d'altitude.

7. Procédé selon l'une des revendications 1 à 6, **caractérisé en ce que** le premier service de communication (10, 18) est un service de communication radio mobile.

8. Procédé selon l'une des revendications 1 à 7, **caractérisé en ce que,** outre la liste de positions d'installations fixes (20) d'un deuxième service de communication (18), au moins une liste de positions d'installations fixes (20) d'au moins un autre service de communication est générée et prise en compte lors de la détermination de la position de l'unité d'émission mobile (12) par rapport à des positions d'installations fixes (20).

9. Dispositif permettant d'améliorer la qualité de signal d'au moins un service de communication (18) dans la zone d'une unité d'émission mobile (12),
dans lequel deux services de communication (10, 18) différents sont prévus dans des bandes de fréquences qui s'influencent mutuellement et
dans lequel l'unité d'émission mobile (12) est configurée pour communiquer au moins dans la bande de fréquences du premier service de communication (10, 18),
dans lequel une liste de positions d'installations fixes (20) d'un deuxième service de communication (18) est enregistrée dans l'unité d'émission mobile (12), laquelle liste est amenée à l'unité d'émission mobile (12) et y est également mémorisée,
dans lequel l'unité d'émission mobile (12) ou l'autre élément participant du premier service de communication (10, 18) est configuré pour déterminer, à l'aide de la liste, la position de l'unité d'émission mobile (12) par rapport à des positions d'installations fixes (20), et
dans lequel l'unité d'émission mobile (12) est configurée pour adapter une caractéristique d'émission de l'unité d'émission mobile (12) à l'approche d'une position d'installations fixes (20),
dans lequel l'unité d'émission mobile (12) présente un capteur pour la détection de l'installation fixe (20) et est configurée pour détecter des installations fixes (20) au moyen du capteur et pour mettre à la disposition d'autres unités d'émission mobiles les positions d'installations fixes (20),
dans lequel l'unité d'émission mobile (12) est compatible avec les deux services de communication (10, 18), de sorte que les premier et deuxième services de communication peuvent alterner,
dans lequel l'unité d'émission mobile (12) comprend la liste d'installations fixes des deux services de communication (10, 18).

10. Dispositif selon la revendication 9, **caractérisé en ce que** l'unité d'émission mobile (12) est un appareil radio mobile ou un ordinateur mobile.
